# EUROPEAN PATENT SPECIFICATION

(11) **EP 0 345 278 B1**
(45) Date of publication and mention of the grant of the patent: **12.04.1995**
(21) Application number: 88901525.1
(22) Date of filing: 29.01.1988
(51) Int. Cl.: B60B 15/26, B60B 15/24, B62D 55/26, B62D 55/28

(54) **GROUND ENGAGING SURFACE FOR ENDLESS TRACKS AND WHEELS**
GRUNDKONTAKTFLÄCHE FÜR RAUPEN UND RÄDER
SURFACE EN PRISE AVEC LE SOL POUR CHENILLES SANS FIN ET ROUES

(30) Priority: 29.01.1987 AU 94/87; 26.02.1987 AU 560/87; 06.10.1987 AU 4756/87; 03.11.1987 AU 5224/87
(43) Date of publication of application: 13.12.1989
(73) Proprietor: AIRBOSS LIMITED, Kewdale, W.A. 6006 (AU)
(72) Inventor: BURNS, Alan, Robert, Mosman Park, W.A. 6012 (AU)
(74) Representative: Pacitti, Pierpaolo A.M.E.
(86) International application number: PCT/AU88/00023
(87) International publication number: WO 88/05729

(56) References cited:
- WO-A-87/02953
- CH-A- 560 624
- FR-A- 1 194 358
- FR-A- 2 036 038
- GB-A- 857 439
- GB-A- 1 416 602
- US-A- 2 807 304
- US-A- 2 984 520
- US-A- 3 548 962
- US-A- 3 619 012
- US-A- 3 637 266
- US-A- 3 819 240

## Description

This invention relates to means providing a running surface of wheels, endless tracks and the like.

The present invention seeks to provide a running surface for wheels, endless tracks and the like which can resiliently flex so as to offer some resistance to shock and which is not pneumatic in nature and thereby not susceptible to puncturing as is the case with pneumatic tyres.

There have been a considerable number of proposals relating to non-pneumatic tires since the advent of powered vehicles, but none of these have come into general commercial use, and pneumatic tyres are used almost universally on wheeled vehicles despite the fact that they have a number of disadvantages when used on agricultural and earth-moving vehicles, for example.

A number of prior proposals show arrangements in which a plurality of non-pneumatic resilient elements are secured to a base wheel or track. For example, in US-A-2,984,520 there is shown a wheel having a steel rim to which are bolted a number of straight lengths of heavy rubber tubing, each length being at a shallow angle to the wheel axis.

Accordingly, the invention relates to a ground-engaging element providing a running surface for a wheel or endless track, said element being in the form of an elongate hollow resilient tube adapted to be detachably affixable to a base structure of said wheel or endless track, the element being deformable in use by the load imposed thereon. The invention is characterised by the features that: the element comprises an inner portion contacting the base structure of the wheel or endless track, said inner portion having an inner face shaped to conform to the base structure to provided face-to-face contact therebetweeen in use of said element, an outer portion which presents a ground-engaging surface facing outwardly of the wheel or endless track in use of the element, the outer portion being positioned in an outward direction away from the base structure and in facing relationship sapced from and generally parallel to the inner portion, deformable side wall portions positioned in facing spaced relationship to each other and extending between the inner portion and the outer portion, said side wall portions being resiliently deformable in use in response to the load imposed on said outer portion the element, and a cavity within the hollow tube between the inner and outer portions and the side wall portions.

While the ground engaging elements may extend in a direction orthogonal to the direction of travel of the running surface, it is preferable that they are inclined to such direction. Furthermore, it is preferable that the elements are arranged in a fashion which does not impose a resultant side thrust on the running surface (such as a chevron pattern). With a chevron pattern, there is in use no resultant side thrust imposed upon the running surface as would be the case with tubular elements extending in an inclined fashion across the full width of the running surface.

In circumstances where a running surface according to the invention is for use with a wheel, the base may simply be the rim of the wheel or a band adapted to be fitted onto the rim. In circumstances where a running surface according to the invention is for use with an endless track, the base may comprise a flexible endless band passing around end rollers thereby to constitute the endless track.

Preferably, the ground engaging elements are detachably fixed to the base by removable fixing means.

Each side face may be of angular or other construction so as to provide a line about which it can flex. The outer face may be provided with a tread formation.

The tubular elements may be formed from rubber or other elastomeric material. The rubber or other elastomeric material may be provided with reinforcement.

The invention will be better understood by reference to the following description of a specific embodiment thereof as shown in the accompanying drawings, in which:-
Fig. 1 is an isometric view of a wheel fitted with means providing a running surface, not forming part of the present invention;
Fig. 2 is an end view of the wheel of Fig. 1;
Fig. 3 is a view of part of the running surface of the wheel of Fig. 1, showing the profile of the tubular elements.
Fig. 4 is a fragmentary view showing a pattern in which tubular elements may be arranged in the wheel of Fig. 1 as an alternative to the pattern illustrated in Fig. 2;
Fig. 5 is an end view of a tubular element in accordance with the present invention;
Fig. 6 is a plan view of the tubular element shown in Fig. 5; and
Fig. 7 is a cross-section on line 11-11 of Fig. 6.

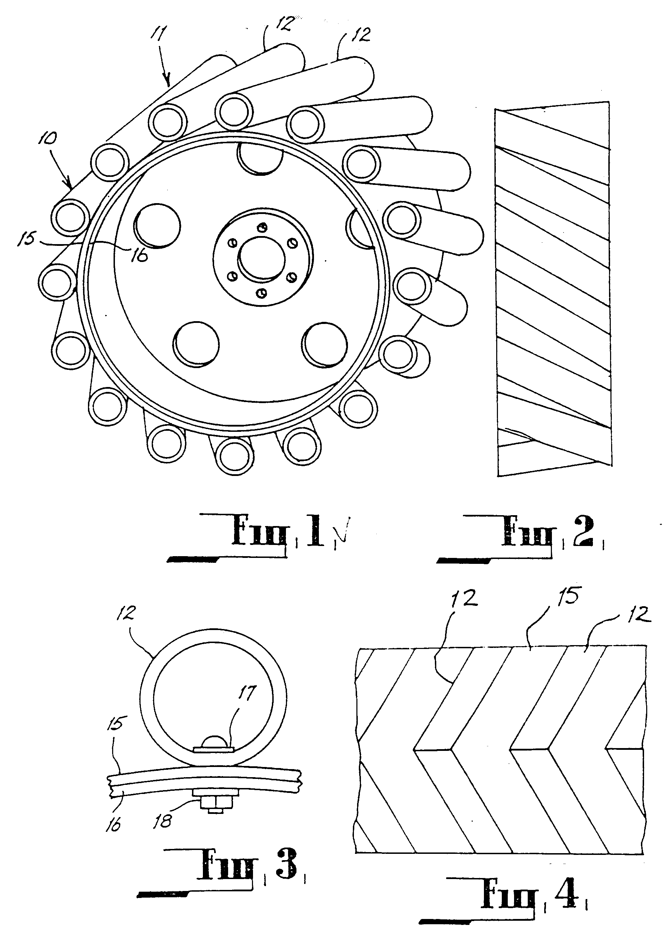

Figs. 1, 2 and 3 of the drawings show a means 10 providing a running surface 11 for a wheel of a work vehicle such as an earth moving machine or agricultural machine.

The running surface 11 comprises a plurality of spaced tubular elements 12 mounted on the outer periphery of an endless base 15 which in use is fitted onto the rim 16 of the vehicle wheel. The tubular elements 12 extend transversely of the direction of travel of the running surface, as best seen in Figs. 1 and 2 of the drawings.

The tubular elements are of a construction so as to deform resiliently under normal load conditions, the tubular elements each being of circular cross-section and formed from a length of heavy duty mining hose. Each tubular element is fixed to the base 15 by means of a reinforcing strip 17 which is positioned within the tubular element and secured to the base 15 and the rim 16 by fixing elements 18 in the form nut and bolt assemblies, as best seen in Fig. 3 of the drawings.

In the running surface arrangement of Figs. 1 to 3, the tubular elements 12 extend transversely of the direction of travel of the running surface for the full width of the running surface, as best shown in Fig. 2 of the drawings. This arrangement has a deficiency in travel in that a side thrust is imposed upon the portion of the running surface in contact with the ground owing to the particular arrangement of the tubular elements.

Fig. 4 of the drawings shows an alternative arrangement of tubular element in which elements are arranged in a chevron pattern. This arrangement has the benefit that in travel there is no resultant side thrust imposed upon the portion of the running surface in contact with the ground. A separate tubular element may provide each arm of the chevron or each tubular element may be so configured as to provide the two arms of the chevron.

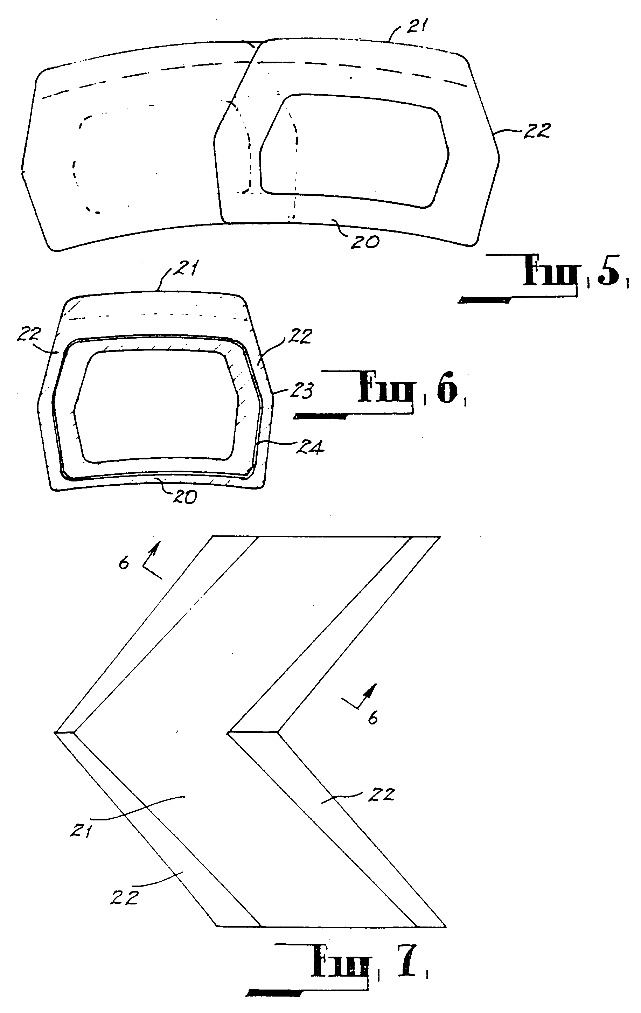

Figs. 5, 6 and 7 illustrate a tubular element used in an embodiment of the invention. The element comprises an inner longitudinal face 20 for detachable engagement against the base, an outer longitudinal face 21 for contacting the ground and, longitudinal side faces 22 between the inner and outer faces.

The side faces 22 are constructed to deform resiliently under normal load conditions. In particular, each side face 22 is of angular construction to provide a line at 23 extending along the length of the face about which the face can flex.

The outer face 21 is provided with a tread formation (not shown).

The tubular element is provided with internal reinforcement means 24 (as shown in Fig. 7) which reinforces the element while allowing resilient deformation in the manner described.

The tubular element is configured into a V-formation (as best seen in Fig. 6) so as to provide a chevron pattern on the wheel.

In use, a plurality of these tubular elements are secured to a wheel or track, for example in a manner similar to that of Figs. 1-4, to provide a running surface composed of adjacent chevron-shaped tread portions.
It should be appreciated that the scope of the invention is not limited to the scope of the embodiment described, but is defined solely by the claims. It should in particular be understood the embodiment described can be applied to either wheels or endless tracks even through it may have been described in relation to only one application.

## Claims

1. A ground engaging element (20-22) providing a running surface for a wheel (16) or endless track, said element (20-22) being in the form of an elongate hollow resilient tube adapted to be detachably affixable to a base structure (15) of said wheel (16) or endless track, said element (20-22) being resiliently deformable in use by the load imposed thereon; characterised in that said element (20-22) comprises an inner portion (20) contacting the base structure (15) of said wheel (16) or endless track, said inner portion having an inner face shaped to conform to the base structure (15) to provide face-to-face contact therebetween in use of said element (20-22), an outer portion (21) presenting a ground-engaging surface facing outwardly of said wheel (16) or endless track in use of said element (20-22), the outer portion (21) being positioned in an outward direction away from the base structure (15) and in facing relationship spaced from and generally parallel to the inner portion (20), deformable side wall portions (22) positioned in facing spaced relationship to each other and extending between the inner (20) and outer (21) portions, said side wall portions (22) being resiliently deformable in use in response to the load imposed on said outer portion (21), and a cavity within the hollow tube between the inner (20) and outer (21) portions and the side wall portions (22).

2. A ground-engaging element as claimed in claim 1, the element (20-22) being shaped as a chevron comprising two lateral portions extending diagonally of the direction of travel and being mutually oppositely inclined.

3. A ground-engaging element as claimed in claim 1 or claim 2, in which the side portions (22) each comprise angled faces joining at a line (23) along the length of the element about which the side portion (22) can flex.

4. A ground-engaging element as claimed in any preceding claim, in which the outer portion (21) is provided with a tread formation.

5. A wheel or endless track comprising a plurality of ground-engaging elements (20-22) as claimed in any preceding claim detachably secured to a support member (15,16) by removable fastening means (17,18), the ground-engaging elements (20-22) being secured to the support member (15, 16) such that said side wall portions (22) are in abutting relationship with those of adjacent elements (20-22) and said outer wall portions (21) form a substantially continuous ground engaging surface of the wheel or track spaced from the support member (15, 16) by said side wall portions (22).

## Patentansprüche

1. Bodeneingriffselement (20-22), welches eine Lauffläche für ein Rad (16) oder eine Raupenkette bereitstellt, wobei das Element (20-22) die Ausbildung eines länglichen, hohlen, elastisch-nachgiebigen Rohres hat, welches für eine lösbare Befestigung an einer Basisstruktur (15) des Rades (16) oder der Raupenkette angepaßt ist, wobei das Element (20-22) im Gebrauch durch die darauf ausgeübte Belastung elastisch-nachgiebig verformbar ist;
dadurch gekennzeichnet, daß das Element (20-22) einen inneren Bereich (20) aufweist, der die Basisstruktur (15) des Rades (16) oder der Raupenkette berührt, wobei der innere Bereich eine Innenfläche hat, die für eine Übereinstimmung mit der Basisstruktur (15) geformt ist, um im Gebrauch des Elements (20-22) eine Flächenberührung zwischen beiden zu schaffen, sowie einen äußeren Bereich (21), der im Gebrauch des Elements (20-22) eine in Bezug auf das Rad (16) oder die Raupenkette nach außen weisende Bodeneingriffsfläche ergibt, wobei der äußere Bereich (21) in einer nach außen ausgerichteten Richtung weg von der Basisstruktur (15) und zu dem inneren Bereich (20) in einer aufeinander ausgerichteten, beabstandeten und generell parallelen Beziehung angeordnet ist, verformbare Seitenwandbereiche (22), die in einer aufeinander ausgerichteten, beabstandeten Beziehung angeordnet sind und zwischen den inneren (20) und äußeren (21) Bereichen verlaufen, wobei die Seitenwandbereiche (22) im Gebrauch in Abhängigkeit von der auf den äußeren Bereich (21) ausgeübten Belastung elastisch-nachgiebig verformbar sind, und einen Hohlraum innerhalb des hohlen Rohres zwischen den inneren (20) und äußeren (21) Bereichen und den Seitenwandbereichen (22).

2. Bodeneingriffselement nach Anspruch 1, bei welchem das Element (20-22) in einer Chevron-Form ausgebildet ist und zwei seitliche Bereiche aufweist, die diagonal zu der Bewegungsrichtung verlaufen und zueinander entgegengesetzt geneigt sind.

3. Bodeneingriffselement nach Anspruch 1 oder Anspruch 2, bei welchem die Seitenbereiche (20) jeweils abgewinkelte Flächen aufweisen, die sich entlang der Länge des Elements an einer Linie (23) verbinden, um welche sich der Seitenbereich (22) biegen kann.

4. Bodeneingriffselement nach einem der vorhergehenden Ansprüche, bei welchem der äußere Bereich (21) mit einer Profilausbildung versehen ist.

5. Rad oder Raupenkette, bestehend aus einer Vielzahl von Bodeneingriffselementen (20-22), wie beansprucht in einem der vorhergehenden Ansprüche und lösbar befestigt an einem Stützglied (15, 16) durch entfernbare Befestigungsmittel (17, 18), wobei die Bodeneingriffselemente (20-22) an dem Stützglied (15, 16) derart befestigt sind, daß die Seitenwandbereiche (22) in einer aneinander anstoßenden Beziehung mit denjenigen von benachbarten Elementen (20-22) sind und die Außenwandbereiche (21) eine im wesentlichen kontinuierliche Bodeneingriffsfläche des Rades oder der Kette bilden, die von dem Stützglied (15, 16) durch die Seitenwandbereiche (22) beabstandet ist.

## Revendications

1. Elément (20 à 22) en prise avec le sol fournissant une surface de roulement pour une roue (16) ou chenille sans fin, ledit élément (20 à 22) étant réalisé sous la forme d'un tube élastique creux allongé prévu pour pouvoir être fixé de façon détachable sur une structure (15) de base de ladite roue (16) ou chenille sans fin, ledit élément (20 à 22) pouvant être élastiquement déformé lors de l'utilisation par la charge qui y est appliquée ; caractérisé en ce que ledit élément (20 à 22) comprend une partie intérieure (20) en contact avec la structure (15) de base de ladite roue (16) ou chenille sans fin, ladite partie intérieure présentant une face intérieure conformée pour s'adapter à la structure (15) de base afin dc fournir un contact face à face entre elles lors dc l'utilisation dudit élément (20 à 22), une partie extérieure (21) présentant une surface en prise avec le sol tournée vers l'extérieur de ladite roue (16) ou chenille sans fin lors de l'utilisation dudit élément (20 à 22), la partie extérieure (21) étant positionnée dans une direction extérieure s'éloignant de la structure (15) de base et disposée face à, espacée par rapport à et globalement parallèle à la partie intérieure (20), des parties (22) de parois latérales déformables positionnées face à face et espacées l'une de l'autre et s'étendant entre les parties intérieure (20) et extérieure (21), lesdites parties (22) de parois latérales pouvant être élastiquement déformées lors de l'utilisation sous l'effet de la charge appliquée sur ladite partie extérieure (21), et une cavité à l'intérieur du tube creux entre les parties intérieure (20) et extérieure (21) et les parties (22) de parois latérales.

2. Elément en prise avec le sol selon la revendication 1, l'élément (20 à 22) se présentant sous la forme d'un chevron comprenant deux parties latérales s'étendant en diagonale par rapport à la direction de déplacement et étant inclinées de façon mutuellement opposée.

3. Elément en prise avec le sol selon la revendication 1 ou la revendication 2, dans lequel les parties latérales (22) comprennent chacune des faces à angles se rejoignant en une ligne (23) suivant la longueur de l'élément selon laquelle la partie latérale (22) peut fléchir.

4. Elément en prise avec le sol selon l'une quelconque des revendications précédentes, dans lequel la partie extérieure (21) est munie d'une surface de roulement.

5. Roue ou chenille sans fin comprenant plusieurs éléments (20 à 22) en prise avec le sol selon l'une quelconque des revendications précédentes, fixés de' façon détachable à un élément de support (15, 16) par des moyens (17, 18) de fixation détachables, les éléments (20 à 22) en prise avec le sol étant fixés à l'élément (15, 16) de support de telle façon que lesdites parties (22) de parois latérales sont en relation de butée avec celles des éléments (20 à 22) adjacents et lesdites parties (21) de parois extérieures forment une surface de la roue ou chenille sensiblement continue en prise avec le sol, espacée de l'élément (15, 16) de support par lesdites parties (22) de parois latérales.
